# EUROPEAN PATENT SPECIFICATION

(11) **EP 1 986 401 B1**
(45) Date of publication and mention of the grant of the patent: **09.09.2009**
(21) Application number: 07106749.0
(22) Date of filing: 23.04.2007
(51) Int. Cl.: H04L 29/08

(54) **Indicating user presence on a messaging network**
Anzeige der Benutzeranwesenheit in einem Nachrichtenübermittlungsnetz
Indication de la présence d'un utilisateur sur un réseau de messagerie

(43) Date of publication of application: 29.10.2008
(73) Proprietor: Research In Motion Limited, Waterloo, Ontario N2L 3W8 (CA)
(72) Inventor: Wormald, Chris, Kitchener Ontario N2K 4J2 (CA); Klassen, Gerhard D, Waterloo, Ontario N2T 1H7 (CA)
(74) Representative: Rickard, David John

(56) References cited:
- WO-A-01/10152
- WO-A-20/04047378
- WO-A-20/06070226
- US-A1- 2006 015 609
- US-B1- 6 330 438

## Description

This invention relates generally to telecommunications. In particular, this invention relates to the updating of user presence information on a wireless messaging network.

Many mobile communications devices are multi-functional and include wireless systems for both voice communications (radiotelephony) and data communications. However, these communications methodologies typically operate using different telecommunications formats. In one example, mobile radiotelephony may operate on the Global System for Mobile communication (GSM) protocol, while other data may be communicated using the General Packet Radio Service (GPRS) protocol. A class B radio device such as a cellular telephone can maintain only one of a data (GPRS) connection or a voice (GSM) connection at any one time. Accordingly, once the user of a mobile communications device has engaged the device's telephone function, the device has been switched to the GSM system and is no longer able to access a data packet transport system. The user is therefore temporarily unable to participate in text communication over a packet data channel.

In other situations, the mobile device user may not be available to participate in data or telephony communications, for example when the user's device is beyond the reach of a mobile communications network; when the user has just received a large number of messages over a short time span; when the mobile communications device includes a calendar function and the user has booked an appointment at the time a message or communication requiring a response is received; or when the mobile communications device is powered down or its radio function disabled. These situations may prove frustrating to other parties attempting to engage in communication with the user via the user's mobile communications device.

It would accordingly be preferable to provide a system and method whereby a recipient's mobile communications device could signal the messaging network when the recipient is not available to review messages or participate in certain types of communication, particularly when the recipient is engaged in a voice call.

WO-A-01/10152 describes methods and systems capable of automatically transmitting a synthesised message to a remote party in response to a predetermined mobile unit system state, where the message is transmitted to the remote party from the mobile unit with at least one base station that is connected with a wireless communication system.

US-B-6330438 discloses a system for warning a mobile unit user of an impending loss of a call due to a weakening of the signal between a cell site and the mobile unit using an audible tone emitted by the mobile unit's earpiece prior to the loss of a call in progress.

### General

In one embodiment there may be a method of indicating a user's presence status in a messaging network, comprising the steps of: in any order: detecting, by a user's mobile communications device, an impending presence event at the mobile communications device; and generating at least one status packet indicating an expected presence status of the user on the messaging network associated with occurrence of the impending presence event; and then transmitting to at least one status recipient the at least one status packet before the occurrence of the presence event, wherein the user's mobile communications device is capable of both voice communication for placing and receiving telephone calls and packet data communication, and the presence event comprises a suspension of packet data communication at the user's mobile communications device due to the use of said device for a telephone call.

In another embodiment there may be provided a mobile communications device for use in a system for indicating presence status in a messaging network and being capable of both voice communication for placing and receiving telephone calls and packet data communication, the system comprising at least one status recipient for receiving status packets indicating the presence of a user of the mobile communications device on the messaging network, the mobile communications device comprising: a device processor for detecting an impending presence event at the mobile communications device and for generating at least one status packet indicating the expected presence status of the user of the mobile communications device on the messaging network associated with occurrence of the impending presence event, and a transmitter for sending the at least one status packet to at least one status recipient before the occurrence of the presence event, wherein the presence event comprises a suspension of packet data communication at the user's mobile communications device due to the use of said device for a telephone call.

### Brief Description of the Drawings

In drawings which illustrate by way of example only a preferred embodiment of the invention,
Figure 1 is a schematic diagram of an exemplary network topology, including a mobile device and a presence server.
Figure 2 is a flow chart of a method for providing user presence information to the network of Figure 1.
Figure 3 is a further flow chart of a method for providing user presence information to the network of Figure 1.
Figure 4 is a block diagram of a system overview of a conventional hand-held mobile communication device for use with the network of Figure 1.

### Description of Preferred Embodiments

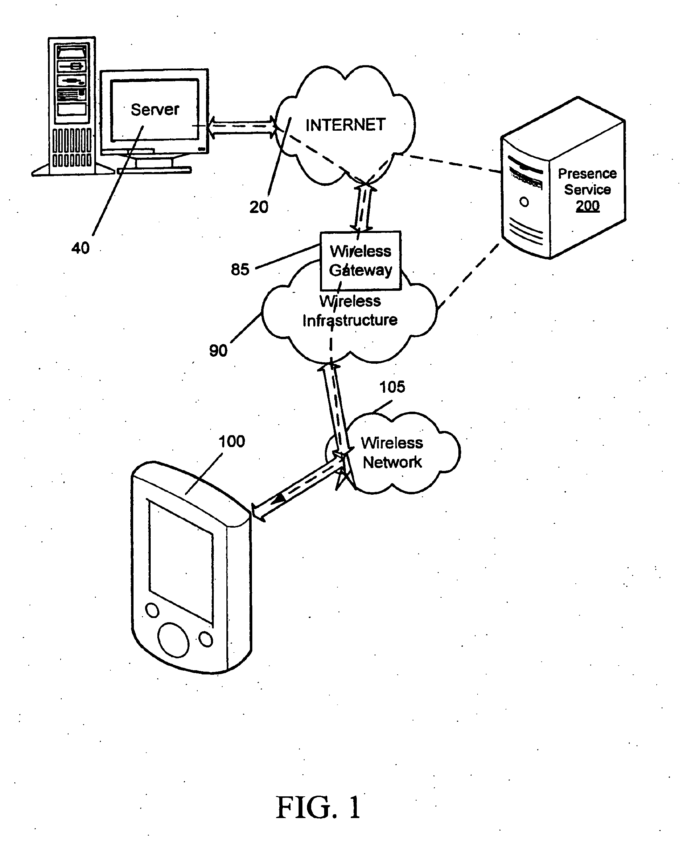

The system and method of the invention will be described in detail below by way of example only in the context of a hand-held mobile communications device 100 as illustrated in Figure 1. It will be appreciated by those skilled in the art that the devices referred to herein as mobile communications devices may include other devices capable of wireless data communication, including, but not limited to, personal computers, mobile communication devices, or mobile computing devices, provided with functionality for wireless data and optionally voice communication over a network, but may also be provided with personal or productivity applications, or devices whose main function is directed to computing or executing productivity applications, but are also adapted to enable wireless data communication. Such devices include, but are not limited to, laptop and notebook computers, PDAs, smartphones, and the like.

The mobile communications device 100 may, for example, be connected to an ISP (Internet Service Provider) on which the user of the device 100 has an account, located within a company, possibly connected to a local area network (LAN), and connected to the Internet 20, or connected to the Internet 20 through an ASP (application service provider). Those skilled in the art will appreciate that the system shown in Figure 1 may instead be connected to a wide area network (WAN) other than the Internet 20.

The wireless gateway 85 and infrastructure 90 provide a link between the Internet 20 and wireless network 105. The wireless infrastructure 90 determines the most likely network for locating a given user and tracks the user as they roam between countries or networks. Messages and other data may be delivered to the mobile communications device 100 via wireless transmission, typically at a radio frequency (RF), from a base station in the wireless network 105 to the mobile communications device 100. The particular network 105 may be any wireless network over which messages may be exchanged with a mobile communication device.

Typically, the mobile communications device 100 is registered on a wireless service provider's (or "carrier's") network. The carrier's network may provide the mobile communications device 100 with access to a public switched telephone network and/or with a cellular network for telephony services, as well as to a network supporting packet-switched communications for text messaging services such as instant messaging (IM), electronic mail (e-mail), and multimedia messaging service (MMS), for example GPRS or IMS (Internet Protocol Multimedia Subsystem). The wireless network 105, infrastructure 90 and gateway 85 may operate as the access network for the packet-switched communications network, which may be operated by the carrier or by another party. It will be appreciated that these text communication and network examples are not intended to limit the scope of the systems and methods provided herein.

A server system 40, such as an enterprise messaging server system, is provided in the network of Figure 1. The server system 40 may be implemented on one or more networked computers within the firewall of a corporation, or on a computer within an ISP or ASP system or the like. The server system 40 may act as the application, network access, and/or file server for one or more communication devices. In a preferred embodiment, the server system 40 may provide messaging functions. The mobile communications device 100, if it is configured for receiving and possibly sending e-mail or other forms of data communication, may be associated with an account on the server system 40. If the server system 40 acts as a message server, the server system 40 may support either a so-called "pull" or "push" message access scheme, wherein the mobile communications device 100 must request that stored messages be forwarded by the message server to the mobile communications device 100 ("pull"), or the server system 40 may be provided with means for automatically redirecting messages addressed to the user of the mobile communications device 100 as they are received ("push"). Other software products and other components that are often used in conjunction with the functions of the server system 40 described herein will be known to those skilled in the art.

Included in the network generally illustrated in Figure 1 is a presence service 200 for the user of the mobile communications device 100. The presence service, which may also be referred to as a presence server, stores information relating to the user's availability status, or "presence", on the network. This presence information comprises, at a minimum, data relating to the user's availability on the network, which may be simply data indicating that the user is "available" or "not available"/"offline"; the presence information may also include more robust data indicating a user's availability level such as the levels disclosed in Klassen, Wormald, Phipps, and Dunk in United States Patent Application Publication No. 2005/0124363, or may comprise more detailed information regarding the user's activities or device status giving rise to his or her presence status, for example whether the mobile communications device 100 is powered on or is in a region outside of radio coverage, whether the user is busy answering messages using the device 100, or if the user is engaged in a telephone call using the device 100, the phone number that the user had dialled or accepted a call from. This presence information is selectively made available to others with access to the presence service 200, typically on a selective permission basis; for example, the mobile device 100 user may designate what other users on the network are permitted to receive the mobile device 100 user's presence information, and what subset of the presence information, described above, that each of the other users is permitted to view. As will be appreciated by those skilled in the art, the presence information may be either "pushed" to or "pulled" by the other users to their own communication devices. The presence service 200 may similarly store and serve presence information for a plurality of users of other mobile communications devices. The presence service 200 may comprise a server or server system operated by the carrier described above or by a third party, and may be either a self-contained server system or a component of a messaging gateway. If the presence service 200 is operated by a third party, then preferably the presence service 200 is accessible by or to the mobile communications device 100 over the Internet 20, although the presence service 200 may be accessible directly via the carrier network. Alternatively, the presence service 200 may be operated by an enterprise, such as the enterprise operating the server system 40. In that case, the presence service 200 may be provided by the server system 40. The implementation of a presence service 200 will be understood by those skilled in the art.

In the preferred embodiment, the mobile communications device 100 is configured for communication over both a voice communication network and a data communication network, but is generally not capable of engaging a text messaging transport, such as an e-mail or IM transport, or other packet-based messaging transports such as MMS and the like, while a telephony subsystem on the device 100 is engaged. For example, a Class A GPRS device is generally capable of connecting to both a GPRS service and a GSM service at the same time, thus being able to carry out both packet and voice communications simultaneously, because it is provided with two radios for transmitting at two different frequencies, if required (although the operation of a Class A device may be simulated by implementing a dual transfer mode feature, which enables both packet and voice communications at the same time with a single radio, provided only a single transmission frequency is required). The more common Class B GPRS device, however, is provided with a single radio and is configured to switch between packet and voice data communication. Although a Class B device may perform the switch automatically without user intervention, it is not capable of engaging in packet and voice data communication at the same time.

In a mobile communications device 100 such as a Class B device, when the user places or receives a voice call over the GSM network, GPRS service is suspended. Specifications for GSM, CDMA and other voice networks that can operate with packet data overlays such as GPRS are generally known and available, including the transmission and reception of messages for managing communications and of SMS messages over the GSM control channel, and operation of a GPRS suspend routine on a Class B device 100. The foregoing will be familiar to those skilled in the art. It will also be appreciated that the suspension of packet data communication during a voice call is not restricted to a mobile communications device 100 configured to operate only on a GSM and a GPRS network; these types of networks are identified as examples only.

Thus, when the user of a mobile communications device 100 is engaged in a voice call, he or she may unable to respond to packet-based data communication such as e-mail, IM, or the like, and is therefore effectively "unavailable" for e-mail, IM, or similar types of communication. Therefore, in the preferred embodiment, the mobile device 100 transmits a packet to the presence service 200 during the brief window between the time a user requests initiation of voice call using a telephony subsystem on the mobile device 100, and the implementation of the request, or the brief window between the notification to the user of an incoming voice call and the connection of the mobile communication device 100 to the network for receiving the incoming call, if the user chooses to accept the incoming call, during the implementation of the GPRS suspend function. This packet is a status packet comprising status information relating to the user's availability or network presence status once the telephony subsystem is engaged. Thus, this packet is preferably the last packet transmitted over a packet data channel from the mobile communications device 100 before packet communication is dropped. Where the device 100 receives notification of an incoming voice call over the control channel, the status packet may be transmitted immediately before the device 100 transmits a response over the control channel indicating that it is available to accept the voice call. Of course, where the device 100 is initiating the voice call, the status packet may be transmitted before the device 100 initiates the voice call over the network although not immediately before packet communication is suspended, for example when the user activates a telephone directory function on the mobile communications device 100, or begins inputting a telephone number in order to place a call. Regardless, in the preferred embodiment, the status packet represents the expected presence status of the user, and not necessarily the current status of the user, since the GPRS suspend function has not been completed by the time the status packet is transmitted by the mobile communications device 100.

Typically, the user will not be available for the duration of the voice call, so the status packet thus generated reflects the user's unavailability. The status packet is preferably pre-built and stored in a memory in the communications device 100, so that it is ready to transmit as soon as an impending presence event that will result in a change in the user's presence status, such as an incoming request for a voice call received over the control channel or the an instruction from the user to initiate a voice call, is detected. In an alternate embodiment, a processor 438 in the mobile communications device 100 is configured to generate the status packet upon detection of the impending presence event, preferably immediately before the transmission of the status packet. The construction of the status packet, including data indicating the packet source as the mobile communications device 100, will be understood by those skilled in the art. It will be appreciated that in the preferred embodiment, the single status packet is constructed so as to minimize the required transmission time; thus, in the simplest embodiment, the status packet may comprise a single bit representing the user's expected presence status once the impending presence event takes place (e.g., "available" or "not available"/"offline"). If the status packet comprises more than one bit for representing the user's expected presence status, then further information may be encoded in the status packet, as described below.

In a further alternative embodiment, two or more status packets are transmitted. These packets may be pre-built, as described above. It will be appreciated that the window for transmission of the at least one status packet may be extremely brief, particularly if the GPRS suspend function is carried out without any additional delay. As described in the preferred embodiment, the communications device 100 transmits only a single packet of data, and further stores one or more pre-built presence status packets, each comprising data representing the availability status of the user (typically, available or unavailable). In this alternate embodiment, the plurality of pre-built presence status packets further comprises a code or at least one bit representing a reason for the unavailability and/or a forwarding or redirection instruction. The reason and forwarding/redirection instructions may be implemented in the plurality of status packets by character strings or codes that are interpretable by the presence service 200. The forwarding/redirection instructions may comprise a telephone number or other contact address to which calls or messages are to be forwarded or redirected. Alternatively, the reason and/or the forwarding/redirection instructions may be encoded in a single, larger, status packet.

As a further enhancement to this embodiment, a delay may be added to the GPRS suspend function, thus providing sufficient time for the plurality of status packets (or the single, larger status packet) to be optionally generated and transmitted during the window. In any of the foregoing embodiments, preferably the mobile communications device 100 does not await any acknowledgement message from the presence service 200 or from any other point in the wireless network.

While the status packet(s) are transmitted to the network for delivery to the presence service 200, it will be appreciated that the presence service 200 is only one possible recipient of presence status information for that user, or "status recipient". In an alternate embodiment, the status packet(s) may be broadcast on the network or routed to other status recipients, such as other mobile communications devices or users on the network.

Furthermore, the status packet(s) may take the form of a short message service (SMS) message, which, as will be understood by those skilled in the art, is transmitted over the same control channel used for managing telephone communications between the mobile communications device 100 and the network. It will be appreciated, however, that the transmission of a SMS message may take longer than the transmission of a single status packet such as that described in connection with the preferred embodiment.

Reasons for unavailability may include the user being busy, for example, because the mobile communications device 100 is engaged in a voice call or because the mobile communications device 100 has received a certain volume of messages within a predetermined period of time; or the user is out of contact or away from the mobile communications device 100, because the device is outside wireless network coverage, the radio signal strength at the mobile communications device 100 is too weak to maintain a connection to the wireless network 105, or the device is powered off. The forwarding/redirection instructions may comprise an alternate telephone number, e-mail address, and so forth, and may be included in the status packet as well; thus, the status packet itself may comprise a string representing a telephone number or other contact address. Alternatively, the presence service 200 may be configured separately with forwarding or redirection information for the user, so that the presence service 200 may respond to queries regarding the user's availability on the network with alternate contact instructions if the user is not available. If the forwarding and redirection instructions are provided in the status packet transmitted from the mobile communications device 100, then preferably these instructions are configurable by the user or through the configuration of an IT (information technology) policy on the device 100.

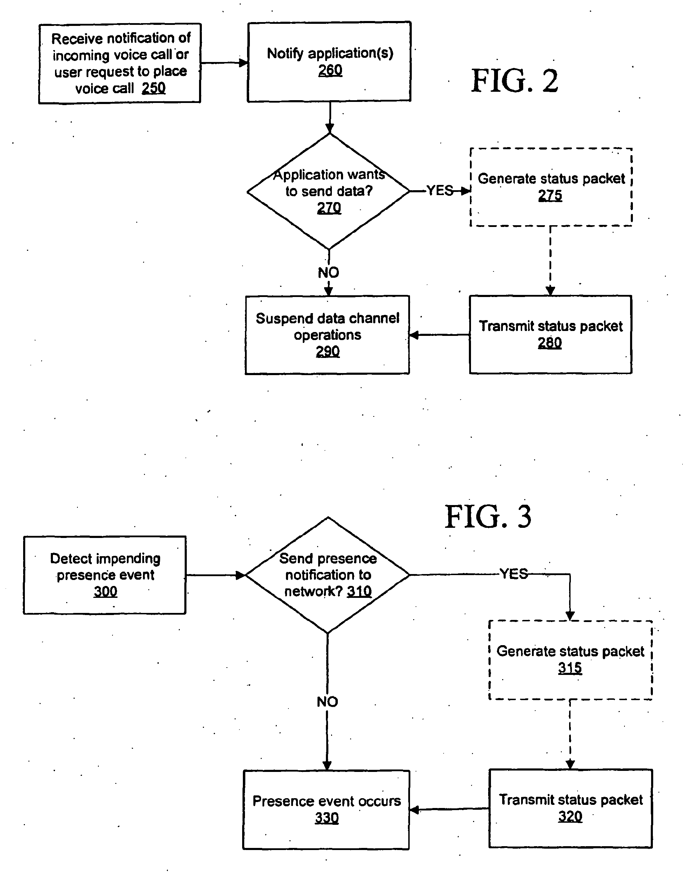

In summary, the mobile communications device 100 is configured to transmit the at least one status packet upon detection of an impending presence event, that is, an event that will result in a change in the user's presence status on the network. This is generally illustrated in Figure 3. At step 300, the mobile communications device 100 detects an impending presence event. Depending on the nature of the presence event, the mobile communications device 100 may be configured to transmit a notification such as a status packet advising of the new presence status of the user; thus, at step 310, the mobile communications device 100 determines whether a status packet needs to be transmitted to the network. If it is determined that no notification needs to be transmitted to the network-for example, if the device 100 is configured such that the particular impending presence event should not affect the user's presence status-then the presence event will occur at step 330. However, if it is determined that a notification regarding the user's presence needs to be transmitted to the network, then the status packet is transmitted at step 320, prior to the occurrence of the presence event at step 330. Prior to the transmission of the status packet at step 320, the status packet is generated at step 315. This step is shown in phantom in Figure 3, since preferably the status packet is pre-built and the step 315 is not contingent on the detection of the impending presence event at step 300. As noted above, it may be possible for the status packet to be generated after detection of the impending presence event at step 300 if such generation may be accomplished in a short period of time, relative to the time period prior to the presence event taking place.

It will be appreciated that the status packet is transmitted to the presence service over a packet-switched network. The preferred embodiments are described in further detail below, with respect to specific presence events such as deactivation of the mobile communications device 100, making or receiving a telephone call, the device moving out of wireless network coverage, or inference.

### Deactivation of the Device

Again with reference to the preferred embodiment illustrated in Figure 3, when the user initiates deactivation of the communications device 100 by invoking a shut-down command at the device 100, as part of the shut-down routine the communications device 100 detects the initiation of the shut-down routine at step 300 and transmits to the presence service 200 at least one status packet at step 320, indicating that the user is not available over the network. Optionally, the status packet comprises a reason or reason code indicating that the user is unavailable because the device 100 is inactive.

Furthermore, preferably as part of a power-up routine when the user turns on the mobile communications device 100, the device 100 is configured to transmit to the presence service 200 a status packet indicating the user's updated availability.

As will be appreciated, where the status packet is transmitted in response to an impending deactivation of the mobile device 100, there may be a sufficiently long time period available to permit the generation of one or more packets without requiring that the packets be pre-configured.

### Making a Telephone Call

With reference to Figure 3, when the mobile communications device 100 detects that the user wishes to place a voice call at step 300, for example by invoking a voice call command at the mobile communications device 100, the device 100 determines that a status packet is to be transmitted to the network at step 310, and transmits a status packet reflecting the user's availability on the network at step 320 as described above. In a further implementation of this embodiment, with reference to Figure 2, upon detection of the impending presence event at step 250-i.e., the imminent voice call-the mobile communications device 100 notifies one or more applications executing on the device 100, for example, e-mail or IM applications, that connectivity to the data network is about to be lost at step 260. In this further embodiment, the various applications are configured to indicate whether the user's presence in respect of those transport methods is to be updated on the network at step 270. If the user's presence is to be updated, then a status packet is transmitted by the mobile communications device 100 at step 280. The data channel operations 290 are then suspended for the mobile communications device 100 at step 290. If the user's presence is not to be updated, then the method proceeds from step 270 directly to step 290.

In still a further embodiment implemented over a carrier's network supporting GSM and GPRS, when a call is placed by the user from the mobile communications device 100, a call request packet is transmitted from the communications device 100 into the GSM network that suspends the GPRS layer and drops the user's communications device 100 down to a decreased level of functionality. In this embodiment, the GSM network forwards the call request packet to the presence service 200, which updates the user's presence information stored at the service 200. Thus, the call request packet is effectively treated as a presence status packet, avoiding the need for the transmission of a separate presence status packet by the mobile communications device 100.

### Receiving a Telephone Call

In a manner similar to that described for the preferred embodiment of the method for transmitting a status packet when the user places a voice call, above, when a notification of an inbound call is received by the mobile communications device 100 at step 300 in the flowchart of Figure 3, if a presence status packet is to be transmitted to the network (as determined at step 310), the status packet is transmitted at step 320 prior to the occurrence of the presence event itself, the connection of the device 100 to the wireless network 105 for the inbound call. As before, the status packet may be generated at step 315 either after detection of the impending presence event 300 and the determination that the user's presence status should be updated on the network 310, or at a time prior to step 300.

In a further embodiment, when a call is placed to a user's communication device 100 which is communicating in GPRS mode over a GPRS network, the GPRS network infrastructure may be configured to initiate a GPRS signal take-down routine for the mobile communications device 100, since it is known that the device 100 will be switching to GSM mode to receive the call. Thus, the GPRS network may, during the take-down routine, generate the status packet on behalf of the communications device 100, and transmit the status packet to the presence service 200.

### Device Moving Out of Range

Unavailability of the user also occurs when the user's mobile communications device 100 moves to a location that is out of the coverage area of the wireless network 105, which may result in either a slow loss of coverage (for example, because the mobile communications device 100 is travelling away from a transmission tower), or a sudden loss of coverage (for example, because the mobile communications device 100 is entering a relatively sharply defined region with no coverage, such as a tunnel). In a preferred embodiment, the mobile communications device 100 is configured to detect the event of the received signal strength from the wireless network 105 dropping below a predetermined threshold. When the signal strength is determined to have dropped below this threshold, the device 100 is configured to interpret the drop as an impending presence event, because it is expected that if the signal strength drops any lower, the user will not be able to engage in voice and/or data communication until the signal strength increases above the predetermined threshold, resulting in an effective change in the user's presence status. Thus, with reference to Figure 3, when the device 100 detects a drop below a predetermined threshold-for example, 40% of maximum expected signal strength-at step 300, if it is determined that a presence notification is to be sent to the network at step 310, a status packet is transmitted at step 320.

Unlike the examples described previously, it may turn out that the presence event itself-the loss of signal to the point where the mobile communications device 100 cannot maintain a voice and/or data connection-will not actually occur at step 330, because the device 100 may enter a region with better radio coverage, and the signal strength will increase past the predetermined threshold. However, it will be appreciated that the method in this embodiment achieves the same solution as the embodiments described above, because the status packet reflecting the user's anticipated presence status once the expected presence event occurs is transmitted before the presence event occurs.

It will also be appreciated that, in this embodiment, preferably once the device 100 detects that the signal strength has increased past the predetermined threshold, a further status packet is transmitted to the network to update the user's presence information at the presence service 200.

### Unavailability by Inference

In a further embodiment, further presence events are inferred from certain situations detected by the device 100. These are situations where the mobile communications device 100 is not engaged in a function that prevents receipt or transmission of messages by other transport methods, and where mobile communications device 100 may be within the coverage range of the wireless network 105, but the user's device is defined as "unavailable" due to other events detectable by the device 100. A presence event which results in a change in the user's presence on the network from "available" to "unavailable" may include the event where the user has received on the device 100 a defined number of messages within a defined period of time that have not yet been reviewed. This may suggest, for example, that the user is too busy to handle further messages; accordingly, the mobile communications device 100 may be configured to interpret the receipt of a large number of messages (e.g. 50), as yet unread, within a specific period of time (e.g. half an hour), as the event to trigger the transmission of a status packet indicating that the user is busy and cannot receive certain types of incoming communications, such as instant messages or telephone calls. In one implementation of this embodiment, a rules-based availability subroutine periodically runs when the recipient's device is activated, determining the 'read' status of received messages.

In another implementation, the presence event may include an upcoming scheduled meeting or task that is recorded in the calendar store for a calendar application provided on the mobile communications device 100. Thus, when the calendar application determines that a scheduled meeting or task is about to start, the device 100 may then detect this as an impending presence event and trigger the transmission of a status packet.

In the foregoing examples, the status packets are transmitted to the presence service 200. The implementation of a presence service 200 with the functionality described herein will be understood by those in the art. In the preferred embodiment, presence server 200 is operable to provide for the transmission of presence information stored at the service 200 to other users on the network. For example, such presence information may be forwarded by presence server 200 to users who are included in an authorized "buddy" list and who are authorized to receive status updates relating to the user of the mobile communications device 100.

In a commercial context, in each of these embodiments the system and method of the invention can be implemented to control the use of an employer's mobile communications devices. The status packet sent to the mobile communications network could include information about a call or message being received, so that when sent through the mobile communications network relay to the employer's local messaging server, an administrator can monitor and track, in real time, such information as who employees are calling, who employees are receiving calls from, and how long employees are engaged on the telephone. In the preferred embodiment this system would be implemented with software containing usage rules, enabling the administrator to enforce rules on usage of the device such as who the user's mobile communications device can call and/or receive calls from. The rules may include a block list that the user's mobile communications device must check before a call could be received or initiated, allowing the employer to control employees' mobile communication device usage.

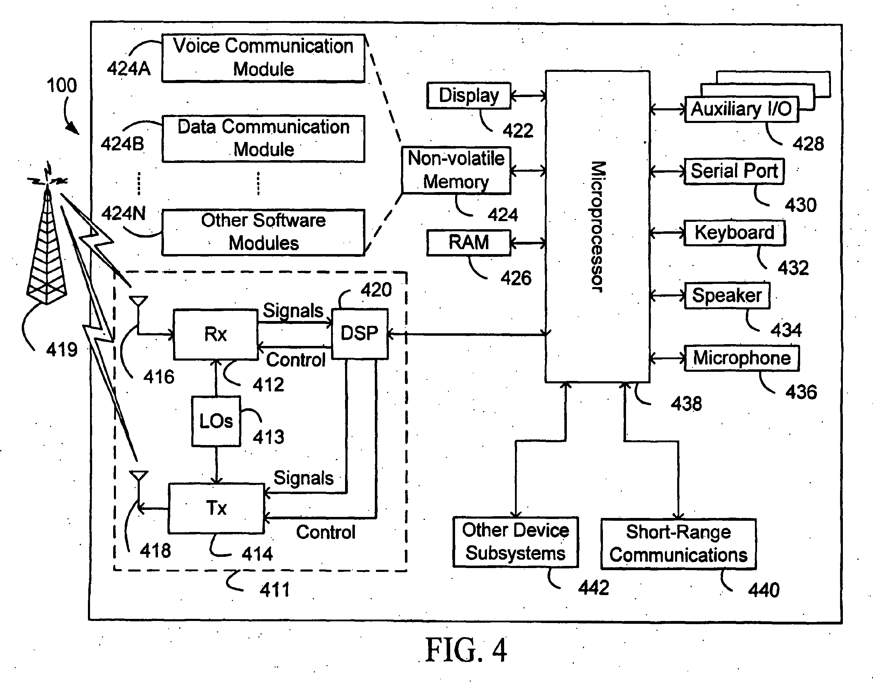

The systems and methods disclosed herein may be used with many different computers and devices, such as a wireless mobile communications device shown in Figure 4. With reference to Figure 4, the mobile communications device 100 is a dual-mode mobile device and includes a transceiver 411, a microprocessor 438, a display 422, non-volatile memory 424, random access memory (RAM) 426, one or more auxiliary input/output (I/O) devices 428, a serial port 430, a keyboard 432, a speaker 434, a microphone 436, a short-range wireless communications sub-system 440, and other device sub-systems 442.

The transceiver 411 includes a receiver 412, a transmitter 414, antennas 416 and 418, one or more local oscillators 413, and a digital signal processor (DSP) 420. The antennas 416 and 418 may be antenna elements of a multiple-element antenna, and are preferably embedded antennas. However, the systems and methods described herein are in no way restricted to a particular type of antenna, or even to wireless communication devices.

The mobile communications device 100 is preferably a two-way communication device having voice and data communication capabilities. Thus, for example, the mobile communications device 100 may communicate over a voice network, such as any of the analog or digital cellular networks, and may also communicate over a data network. The voice and data networks are depicted in Figure 4 by the communication tower 419. These voice and data networks may be separate communication networks using separate infrastructure, such as base stations, network controllers, etc., or they may be integrated into a single wireless network.

The transceiver 411 is used to communicate with the network 319, and includes the receiver 412, the transmitter 414, the one or more local oscillators 313 and the DSP 320. The DSP 320 is used to send and receive signals to and from the transceivers 416 and 418, and also provides control information to the receiver 412 and the transmitter 414. If the voice and data communications occur at a single frequency, or closely-spaced sets of frequencies, then a single local oscillator 413 may be used in conjunction with the receiver 412 and the transmitter 414. Alternatively, if different frequencies are utilized for voice communications versus data communications for example, then a plurality of local oscillators 413 can be used to generate a plurality of frequencies corresponding to the voice and data networks 419. Information, which includes both voice and data information, is communicated to and from the transceiver 311 via a link between the DSP 420 and the microprocessor 438.

The detailed design of the transceiver 411, such as frequency band, component selection, power level, etc., will be dependent upon the communication network 419 in which the mobile communications device 100 is intended to operate. For example, a mobile communications device 100 intended to operate in a North American market may include a transceiver 411 designed to operate with any of a variety of voice communication networks, such as the Mobitex or DataTAC mobile data communication networks, AMPS, TDMA, CDMA, PCS, etc., whereas a mobile communications device 100 intended for use in Europe may be configured to operate with the GPRS data communication network and the GSM voice communication network. Other types of data and voice networks, both separate and integrated, may also be utilized with a mobile communications device 100.

Depending upon the type of network or networks 419, the access requirements for the mobile communications device 100 may also vary. For example, in the Mobitex and DataTAC data networks, mobile devices are registered on the network using a unique identification number associated with each mobile device. In GPRS data networks, however, network access is associated with a subscriber or user of a mobile device. A GPRS device typically requires a subscriber identity module SIM, which is required in order to operate a mobile device on a GPRS network. Local or non-network communication functions (if any) may be operable, without the SIM device, but a mobile device will be unable to carry out any functions involving communications over the data network 319, other than any legally required operations, such as '911' emergency calling.

After any required network registration or activation procedures have been completed, the mobile communications device 100 may the send and receive communication signals, including both voice and data signals, over the networks 419.

Signals received by the antenna 416 from the communication network 419 are routed to the receiver 412, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 420. In a similar manner, signals to be transmitted to the network 419 are processed, including modulation and encoding, for example, by the DSP 420 and are then provided to the transmitter 414 for digital to analog conversion, frequency up conversion, filtering, amplification and transmission to the communication network 419 via the antenna 418.

In addition to processing the communication signals, the DSP 420 also provides for transceiver control. For example, the gain levels applied to communication signals in the receiver 412 and the transmitter 414 may be adaptively controlled through automatic gain control algorithms implemented in the DSP 420. Other transceiver control algorithms could also be implemented in the DSP 420 in order to provide more sophisticated control of the transceiver 411.

The microprocessor 438 preferably manages and controls the overall operation of the mobile communications device 100. Many types of microprocessors or microcontrollers could be used here, or, alternatively, a single DSP 420 could be used to carry out the functions of the microprocessor 438. Low-level communication functions, including at least data and voice communications, are performed through the DSP 420 in the transceiver 411. Other, high-level communication applications, such as a voice communication application 424A, and a data communication application 424B may be stored in the non-volatile memory 424 for execution by the microprocessor 438. For example, the voice communication module 424A may provide a high-level user interface operable to transmit and receive voice calls between the mobile communications device 100 and a plurality of other voice or dual-mode devices via the network 419. Similarly, the data communication module 424B may provide a high-level user interface operable for sending and receiving data, such as e-mail messages, files, organizer information, short text messages, etc., between the mobile communications device 100 and a plurality of other data devices via the networks 419. The microprocessor 438 also interacts with other device subsystems, such as the display 422, the RAM 426, the auxiliary input/output (I/O) subsystems 428, the serial port 430, the keyboard 432, the speaker 434, the microphone 436, the short-range communications subsystem 440 and any other device subsystems generally designated as 442.

Some of the subsystems shown in Figure 4 perform communication-related functions, whereas other subsystems may provide "resident" or on-device functions. Notably, some subsystems, such as the keyboard 432 and the display 422 may be used for both communication-related functions, such as entering a text message for transmission over a data communication network, and device-resident functions such as a calculator or task list or other PDA type functions.

Operating system software used by the microprocessor 438 is preferably stored in a persistent store such as non-volatile memory 424. The non-volatile memory 424 may be implemented, for example, as a Flash memory component, or as battery backed-up RAM. In addition to the operating system, which controls low-level functions of the mobile device 410, the non-volatile memory 424 includes a plurality of software modules 424A-424N that can be executed by the microprocessor 438 (and/or the DSP 420), including a voice communication module 424A, a data communication module 424B, and a plurality of other operational modules 424N for carrying out a plurality of other functions. These modules are executed by the microprocessor 438 and provide a high-level interface between a user and the mobile communications device 100. This interface typically includes a graphical component provided through the display 422, and an input/output component provided through the auxiliary I/O 428, keyboard 432, speaker 434, and microphone 436. The operating system, specific device applications or modules, or parts thereof, may be temporarily loaded into a volatile store, such as RAM 426 for faster operation. Moreover, received communication signals may also be temporarily stored to RAM 426, before permanently writing them to a file system located in a persistent store such as the flash memory 424.

The non-volatile memory 424 preferably provides a file system to facilitate storage of PIM data items on the device. The PIM application preferably includes the ability to send and receive data items, either by itself, or in conjunction with the voice and data communication modules 424A, 424B, via the wireless networks 419. The PIM data items are preferably seamlessly integrated, synchronized and updated, via the wireless networks 419, with a corresponding set of data items stored or associated with a host computer system, thereby creating a mirrored system for data items associated with a particular user.

Context objects representing at least partially decoded data items, as well as fully decoded data items, are preferably stored on the mobile communications device 100 in a volatile and non-persistent store such as the RAM 426. Such information may instead be stored in the non-volatile memory 424, for example, when storage intervals are relatively short, such that the information is removed from memory soon after it is stored. However, storage of this information in the RAM 426 or another volatile and non-persistent store is preferred, in order to ensure that the information is erased from memory when the mobile communications device 100 loses power. This prevents an unauthorized party from obtaining any stored decoded or partially decoded information by removing a memory chip from the mobile communications device 100, for example.

The mobile communications device 100 may be manually synchronized with a host system by coupling the serial port 430, such as a Universal Serial Bus (USB) port, of the device 100 with a port on a computer system or other device. The serial port 430 may also be used to enable a user to set preferences through an external device or software application, or to download other application modules 324N for installation. This wired download path may be used to load an encryption key onto the device, which is a more secure method than exchanging encryption information via the wireless network 419.

A short-range communications subsystem 440 is also included in the mobile communications device 100. The subsystem 440 may include an infrared device and associated circuits and components, or a short-range RF communication module such as a Bluetooth® module or an 802.11 module, for example, to provide for communication with similarly-enabled systems and devices. Those skilled in the art will appreciate that "Bluetooth" and "802.11" refer to sets of specifications, available from the Institute of Electrical and Electronics Engineers, relating to wireless personal area networks and wireless local area networks, respectively.

The systems and methods disclosed herein are presented only by way of example and are not meant to limit the scope of the invention. Other variations of the systems and methods described above will be apparent to those skilled in the art and as such are considered to be within the scope of the invention. For example, it should be understood that steps and the order of the steps in the processing described herein may be altered, modified and/or augmented and still achieve the desired outcome.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

Various embodiments of the present invention having been thus described in detail by way of example, it will be apparent to those skilled in the art that variations and modifications may be made without departing from the invention. The invention includes all such variations and modifications as fall within the scope of the appended claims.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method of indicating a user's presence status in a messaging network (105, 20, 419), comprising the steps of:
in any order:
detecting (300), by a user's mobile communications device (100), an impending presence event at the user's mobile communications device (100); and
generating (275, 315) at least one status packet indicating an expected presence status of the user on the messaging network associated with occurrence of the impending presence event; and
then transmitting (280, 320) to at least one status recipient the at least one status packet before the occurrence of the presence event,
wherein the user's mobile communications device (100) is capable of both voice communication for placing and receiving telephone calls and packet data communication, and the presence event comprises a suspension of packet data communication at the user's mobile communications device due to the use of said device for a telephone call.

2. The method of claim 1, wherein the at least one status recipient is any of: a presence service (200) on the messaging network, a further mobile communications device and/or at least one message sender designated by the user.

3. The method of claim 1 or claim 2 wherein the impending presence event comprises at least one of:
an indication that an outgoing telephone call is about to be placed using the user's mobile communications device (100); and
a notification of an incoming telephone call at the user's mobile communications device (100).

4. The method of any one of claims to 3, wherein the user's mobile communications device (100) comprises a Class B mobile communications device.

5. The method of claim 4, wherein the mobile communications device (100) is provided with a capability of voice communication when connected to a Global System for Mobile Communications 'GSM' network and provided with a capability of packet data communication when connected to a General Packet Radio Service 'GPRS' network.

6. The method of claim 5 when dependent on claim 3, wherein a notification of an incoming telephone call is received (250) over a GSM control channel.

7. The method of any one of the preceding claims, wherein the at least one status packet is transmitted over a packet data channel.

8. The method of any of claims 1 to 6, wherein the at least one status packet is transmitted in a Short Message Service 'SMS' message.

9. The method of any one of the preceding claims, further comprising the steps of generating at least one further status packet indicating the user's presence on the messaging network and transmitting the at least one further status packet to the at least one status recipient on a periodic basis.

10. The method of any one of the preceding claims wherein the at least one status packet is generated at the user's mobile communications device (100).

11. The method of any one of claims 1 to 9 wherein the at least one status packet is generated at a presence service (200).

12. The method of any one of the preceding claims, wherein the at least one status packet comprises at least one of a reason and a redirection or forwarding instruction.

13. A computer-readable medium comprising code executable by a mobile communications device (100) for causing the mobile communications device to carry out all the steps of the method of claim 10.

14. A mobile communications device (100) for use in a system for indicating presence status in a messaging network (105, 20, 419) and being capable of both voice communication for placing and receiving telephone calls and packet data communication, the system comprising at least one status recipient for receiving status packets indicating the presence of a user of the mobile communications device on the messaging network, the mobile communications device comprising:
a device processor (438, 420) for detecting an impending presence event at the mobile communications device and for generating at least one status packet indicating the expected presence status of the user of the mobile communications device on the messaging network associated with occurrence of the impending presence event, and
a transmitter (424N, 411) for sending the at least one status packet to at least one status recipient before the occurrence of the presence event,
wherein the presence event comprises a suspension of packet data communication at the user's mobile communications device due to the use of said device for a telephone call.

15. The mobile communications device (100) of claim 15, further comprising code executable by the device processor for causing the mobile communications device to carry out the steps of the method of any one of claims 2 to 12.

16. The mobile communications device (100) of claim 14 or claim 15, comprising a Class B mobile communications device.

17. The mobile communications device (100) of any one of claims 14 to 16, wherein the mobile communications device is provided with a capability of voice communication when connected to a Global System for Mobile Communications 'GSM' network and provided with a capability of packet data communication when connected to a General Packet Radio Service 'GPRS' network.

18. A communications system comprising a plurality of mobile communication devices (100) as claimed in any one of claims 14 to 17.

## Patentansprüche

1. Verfahren zum Anzeigen des Anwesenheitsstatus eines Benutzers in einem Nachrichtenübermittlungsnetz (105, 20, 419), das folgende Schritte umfasst:
in beliebiger Reihenfolge:
Erkennen (300) eines bevorstehenden Anwesenheitsereignisses an dem mobilen Kommunikationsgerät über das mobile Kommunikationsgerät (100) eines Benutzers; und
Generieren (275, 315) mindestens eines Statuspakets, das einen erwarteten Anwesenheitsstatus des Benutzers in dem mit dem Eintritt des bevorstehenden Anwesenheitsereignisses assoziierten Nachrichtenübermittlungsnetz anzeigt; und
anschließend Übertragen (280, 320) des mindestens einen Statuspakets an mindestens einen Statusempfänger vor dem Eintritt des Anwesenheitsereignisses,
wobei das mobile Kommunikationsgerät (100) des Benutzers die Fähigkeit für sowohl Sprachkommunikation zum Tätigen und Empfangen von Telefonaten als auch Paketdatenkommunikation besitzt und das Anwesenheitsereignis eine Aussetzung der Paketdatenkommunikation an dem mobilen Kommunikationsgerät des Benutzers aufgrund der Nutzung des Geräts für ein Telefonat umfasst.

2. Verfahren nach Anspruch 1, wobei der mindestens eine Statusempfänger ein Anwesenheitsdienst (200) in dem Nachrichtenübermittlungsnetz, ein weiteres mobiles Kommunikationsgerät und/oder mindestens ein von dem Benutzer bestimmter Nachrichtensender ist.

3. Verfahren nach Anspruch 1 oder Anspruch 2, wobei das bevorstehende Anwesenheitsereignis umfasst:
eine Anzeige, dass das Tätigen eines abgehenden Telefonats unter Verwendung des mobilen Kommunikationsgeräts (100) des Benutzers unmittelbar bevorsteht; und/oder
eine Benachrichtigung über ein ankommendes Telefonat an dem mobilen Kommunikationsgerät (100) des Benutzers.

4. Verfahren nach einem der Ansprüche 1 bis 3, wobei das mobile Kommunikationsgerät (100) des Benutzers ein mobiles Klasse-B-Kommunikationsgerät umfasst.

5. Verfahren nach Anspruch 4, wobei das mobile Kommunikationsgerät (100) bei der Verbindung mit einem ,GSM'-Netz (Global System for Mobile Communications) mit einer Sprachkommunikationsfähigkeit ausgestattet ist und bei der Verbindung mit einem 'GPRS'-Netz (General Packet Radio Service) mit einer Paketdatenkommunikationsfähigkeit ausgestattet ist.

6. Verfahren nach Anspruch 5 bei Abhängigkeit von Anspruch 3, wobei eine Benachrichtigung über ein ankommendes Telefonat über einen GSM-Steuerkanal empfangen (250) wird.

7. Verfahren nach einem der vorangehenden Ansprüche, wobei das mindestens eine Statuspaket über einen Paketdatenkanal übertragen wird.

8. Verfahren nach einem der Ansprüche 1 bis 6, wobei das mindestens eine Statuspaket in einer ,SMS'-Nachricht (Short Message Service) übertragen wird.

9. Verfahren nach einem der vorangehenden Ansprüche, das ferner die Schritte des Generierens mindestens eines weiteren Statuspakets, das die Anwesenheit des Benutzers in dem Nachrichtenübermittlungsnetz anzeigt, und des Übertragens des mindestens einen weiteren Statuspakets an den mindestens einen Statusempfänger in regelmäßigen Zeitabständen umfasst.

10. Verfahren nach einem der vorangehenden Ansprüche, wobei das mindestens eine Statuspaket an dem mobilen Kommunikationsgerät des Benutzers generiert wird.

11. Verfahren nach einem der vorangehenden Ansprüche, wobei das mindestens eine Statuspaket an einem Anwesenheitsdienst (200) generiert wird.

12. Verfahren nach einem der vorangehenden Ansprüche, wobei das mindestens eine Statuspaket einen Grund und/oder einen Um- oder Weiterleitungsbefehl umfasst.

13. Computerlesbares Medium, das Code umfasst, der von einem mobilen Kommunikationsgerät (100) ausführbar ist, um zu bewirken, dass das mobile Kommunikationsgerät alle Schritte des Verfahrens nach Anspruch 10 ausführt.

14. Mobiles Kommunikationsgerät (100) zur Nutzung in einem System zum Anzeigen eines Anwesenheitsstatus in einem Nachrichtenübermittlungsnetz (105, 20, 419), das die Fähigkeit für sowohl Sprachkommunikation zum Tätigen und Empfangen von Telefonaten als auch Paketdatenkommunikation besitzt, wobei das System mindestens einen Statusempfänger zum Empfangen von Statuspaketen umfasst, die die Anwesenheit eines Benutzers des mobilen Kommunikationsgeräts in dem Nachrichtenübermittlungsnetz anzeigen, wobei das mobile Kommunikationsgerät umfasst:
einen Geräteprozessor (438, 420) zum Erkennen eines bevorstehenden Anwesenheitsereignisses an dem mobilen Kommunikationsgerät und zum Generieren mindestens eines Statuspakets, das den erwarteten Anwesenheitsstatus des Benutzers des mobilen Kommunikationsgeräts in dem mit dem Eintritt des bevorstehenden Anwesenheitsereignisses assoziierten Nachrichtenübermittlungsnetz anzeigt, und
einen Sender (424N, 411) zum Versenden des mindestens einen Statuspakets an mindestens einen Statusempfänger vor dem Eintritt des Anwesenheitsereignisses,
wobei das Anwesenheitsereignis eine Aussetzung der Paketdatenkommunikation an dem mobilen Kommunikationsgerät des Benutzers aufgrund der Nutzung des Geräts für ein Telefonat umfasst.

15. Mobiles Kommunikationsgerät (100) nach Anspruch 15, das ferner Code umfasst, der von dem Geräteprozessor ausführbar ist, um zu bewirken, dass das mobile Kommunikationsgerät die Schritte des Verfahrens nach einem der Ansprüche 2 bis 12 ausführt.

16. Mobiles Kommunikationsgerät (100) nach Anspruch 14 oder Anspruch 15, das ein mobiles Klasse-B-Kommunikationsgerät umfasst.

17. Mobiles Kommunikationsgerät (100) nach einem der Ansprüche 14 bis 16, wobei das mobile Kommunikationsgerät (100) bei der Verbindung mit einem ,GSM'-Netz (Global System for Mobile Communications) mit einer Sprachkommunikationsfähigkeit ausgestattet ist und bei der Verbindung mit einem 'GPRS'-Netz (General Packet Radio Service) mit einer Paketdatenkommunikationsfähigkeit ausgestattet ist.

18. Kommunikationssystem, das mehrere mobile Kommunikationsgeräte (100) nach einem der Ansprüche 14 bis 17 umfasst.

## Revendications

1. Un procédé pour indiquer un statut de présence d'un utilisateur dans un réseau de messagerie (105, 20, 419), comportant les étapes consistant à:
dans n'importe quel ordre :
détecter (300), par un dispositif de communication mobile (100) d'un utilisateur, un événement de présence imminent au niveau du dispositif de communication mobile ; et
générer (275, 315) au moins un paquet de statut indiquant un statut de présence attendu de l'utilisateur sur le réseau de messagerie associé à l'occurrence de l'événement de présence imminent ; et
puis transmettre (280, 320) à au moins un destinataire de statut l'au moins un paquet de statut avant l'occurrence de l'événement de présence,
où le dispositif de communication mobile (100) d'un utilisateur est capable à la fois de communication vocale pour passer et recevoir des appels téléphoniques et de communication de données par paquets, et l'événement de présence comporte une suspension de communication de données par paquets au niveau du dispositif de communication mobile d'un utilisateur due à l'utilisation dudit dispositif pour un appel téléphonique.

2. Le procédé de la revendication 1, où l'au moins un destinataire de statut est n'importe quel destinataire parmi : un service de présence (200) sur le réseau de messagerie, un autre dispositif de communication mobile et/ou au moins un expéditeur de message désigné par l'utilisateur.

3. Le procédé de la revendication 1 ou de la revendication 2 où l'événement de présence imminent comporte au moins un élément parmi :
une indication qu'un appel téléphonique sortant est sur le point d'être passé à l'aide du dispositif de communication mobile (100) d'un utilisateur ; et
une notification d'un appel téléphonique entrant au niveau du dispositif de communication mobile (100) d'un utilisateur.

4. Le procédé de n'importe laquelle des revendications 1 à 3, où le dispositif de communication mobile (100) d'un utilisateur comporte un dispositif de communication mobile de Classe B.

5. Le procédé de la revendication 4, où le dispositif de communication mobile (100) est muni d'une capacité de communication vocale lorsque connecté à un réseau GSM (Système mondial de communication mobile) et muni d'une capacité de communication de données par paquets lorsque connecté à un réseau GPRS (Service général de radiocommunication par paquets).

6. Le procédé de la revendication 5 lorsque dépendante de la revendication 3, où une notification d'un appel téléphonique entrant est reçue (250) sur un canal de contrôle GSM.

7. Le procédé de n'importe laquelle des revendications précédentes, où l'au moins un paquet de statut est transmis sur un canal de données par paquets.

8. Le procédé de n'importe lesquelles des revendications 1 à 6, où l'au moins un paquet de statut est transmis dans un message SMS (Service de messages courts).

9. Le procédé de n'importe laquelle des revendications précédentes, comportant de plus les étapes de génération d'au moins un paquet de statut supplémentaire indiquant la présence d'un utilisateur sur le réseau de messagerie et de transmission de l'au moins un paquet de statut supplémentaire à l'au moins un destinataire de statut sur une base périodique.

10. Le procédé de n'importe laquelle des revendications précédentes où l'au moins un paquet de statut est généré au niveau du dispositif de communication mobile d'un utilisateur.

11. Le procédé de n'importe laquelle des revendications précédentes où l'au moins un paquet de statut est généré au niveau d'un service de présence (200).

12. Le procédé de n'importe laquelle des revendications précédentes, où l'au moins un paquet de statut comporte au moins un élément parmi une raison et une instruction de redirection ou de réacheminement.

13. Un support lisible par ordinateur comportant un code exécutable par un dispositif de communication mobile (100) pour amener le dispositif de communication mobile à effectuer toutes les étapes du procédé de la revendication 10.

14. Un dispositif de communication mobile (100) pour une utilisation dans un système pour indiquer un statut de présence dans un réseau de messagerie (105, 20, 419) et étant capable à la fois de communication vocale pour passer et recevoir des appels téléphoniques et de communication de données par paquets, le système comportant au moins un destinataire de statut pour recevoir des paquets de statut indiquant la présence d'un utilisateur du dispositif de communication mobile sur le réseau de messagerie, le dispositif de communication mobile comportant :
un processeur de dispositif (438, 420) pour détecter un événement de présence imminent au niveau du dispositif de communication mobile et pour générer au moins un paquet de statut indiquant le statut de présence attendu de l'utilisateur du dispositif de communication mobile sur le réseau de messagerie associé à l'occurrence de l'événement de présence imminent, et
un transmetteur (424N, 411) pour envoyer l'au moins un paquet de statut à au moins un destinataire de statut avant l'occurrence de l'événement de présence,
où l'événement de présence comporte une suspension de communication de données par paquets au niveau du dispositif de communication mobile de l'utilisateur due à l'utilisation dudit dispositif pour un appel téléphonique.

15. Le dispositif de communication mobile (100) de la revendication 15, comportant de plus un code exécutable par le processeur de dispositif pour amener le dispositif de communication mobile à effectuer les étapes du procédé de n'importe laquelle des revendications 2 à 12.

16. Le dispositif de communication mobile (100) de la revendication 14 ou de la revendication 15, comportant un dispositif de communication mobile de Classe B.

17. Le dispositif de communication mobile (100) de n'importe laquelle des revendications 14 à 16, où le dispositif de communication mobile est muni d'une capacité de communication vocale lorsque connecté à un réseau GSM (Système mondial de communication mobile) et muni d'une capacité de communication de données par paquets lorsque connecté à un réseau GPRS (Service général de radiocommunication par paquets).

18. Un système de communication comportant une pluralité de dispositifs de communication mobile (100) tel que revendiqué dans n'importe laquelle des revendications 14 à 17.
